# EUROPEAN PATENT SPECIFICATION

(11) **EP 4 258 914 B1**
(45) Date of publication and mention of the grant of the patent: **28.10.2026**
(21) Application number: 23735214.1
(22) Date of filing: 18.01.2023
(51) Int. Cl.: A24D 1/20, A24F 40/50, A24F 40/46, A24F 40/485, A24D 1/04, A24F 40/60, A24F 40/42, A24F 40/10

(54) **AEROSOL GENERATING DEVICE**
AEROSOLERZEUGUNGSVORRICHTUNG
DISPOSITIF DE GÉNÉRATION D'AÉROSOL

(30) Priority: 20.01.2022 KR 20220008521
(43) Date of publication of application: 18.10.2023
(73) Proprietor: KT&G Corporation, Daedeok-gu Daejeon 34337 (KR)
(72) Inventor: LEE, Chang Hoon, Gwangju 61134 (KR); LEE, Won Kyeong, Guri-si, Gyeonggi-do 11920 (KR); CHO, Byung Sung, Gwangmyeong-si, Gyeonggi-do 14241 (KR); HONG, Hee Jeong, Seoul 06155 (KR)
(74) Representative: Ter Meer und Partner mbB
(86) International application number: PCT/KR2023/000864
(87) International publication number: WO 2023/140615

(56) References cited:
- EP-A1- 3 895 556
- EP-A1- 4 218 433
- WO-A1-2021/256659
- CN-A- 112 167 717
- KR-A- 20200 057 490
- KR-A- 20210 083 552
- US-A1- 2020 221 782
- US-A1- 2020 305 512
- US-A1- 2020 390 158

## Description

### Technical Field

The present disclosure relates to an aerosol generating device, and more particularly, to an aerosol generating device capable of generating a smokeless aerosol and a smoke aerosol.

### Background Art

Recently, the demand for alternative methods to overcome the shortcomings of general cigarettes has increased. For example, there is an increasing demand for a method of generating aerosol by heating an aerosol generating material in cigarettes or liquid storages, rather than by burning cigarettes.

However, in an aerosol generating device according to the related art, it is not possible to switch from a mode for generating a smokeless aerosol to a mode for generating a smoke aerosol. US 2020/305512 A1 relates to a method of controlling a temperature of a heater included in an aerosol generation device according to a type of cigarette. The method includes receiving temperature profiles of different types of cigarette from a user terminal; sensing a cigarette coupled to the heater after receiving the temperature profiles; identifying a type of the sensed cigarette; selecting a temperature profile corresponding to the identified type from among the temperature profiles; and controlling power supplied from a battery to the heater according to the selected temperature profile. EP 4 218 433 A1 relates to an aerosol generation device having a smokeless function and an aerosol-generating article used therewith. The aerosol-generating article may include a tobacco rod which includes a first filter segment, a second filter segment, and a cavity segment. Here, the cavity segment may be filled with tobacco granules. WO 2021/256659 A1 relates to an aerosol generating device which may comprise: a cartridge for storing aerosol generating material; a main body having the cartridge detachably coupled thereto; a first heater for heating a cigarette which is inserted into the device; a second heater for heating the aerosol generating material; and a processor for controlling the first heater and the second heater separately so that the device operates by one mode among a smokeless mode in which visible smoke is not generated, and a smoking mode in which visible smoke is generated. KR 2021 0083552 A relates to an aerosol generating device which emits visually visible vapor in a first smoking mode and emits visually non-visible vapor in a second smoking mode, and a method for operating the same. The aerosol generating device comprises a battery; a first cartridge; a second cartridge; and a control part, wherein the control part controls power provided to a first heater and a second heater in the first smoking mode, and controls power provided to the first heater and the second heater in the second smoking mode.

### Disclosure of Invention

### Technical Problem

Technical problems to be solved by the present disclosure are to provide an aerosol generating device in which switching between a smokeless mode and a smoke mode may be performed.

The technical problems of the present disclosure are not limited to the aforementioned description, and other technical problems may be derived from the embodiments described hereinafter.

### Solution to Problem

An aerosol generating device according to an aspect of the present disclosure is defined in claim 1.

### Advantageous Effects of Invention

According to the present disclosure, an aerosol generating device in which switching from a smokeless mode for generating a smokeless aerosol to a smoke mode for generating a smoke aerosol may be performed, is provided.

The effects of the present disclosure are not limited by the illustrated contents described above, and more various effects are included in the present specification.

### Brief Description of Drawings

FIG. 1 is a view of an aerosol generating device according to an embodiment;
FIG. 2 is a view of a first aerosol generating substrate according to an embodiment;
FIG. 3 is a view of an inhalation substrate according to an embodiment;
FIG. 4 is an internal block diagram of an aerosol generating device according to an embodiment;
FIG. 5 is a cross-sectional view of an aerosol generating device according to an embodiment, not falling within the scope of the claims;
FIG. 6 is a view of a heater according to an embodiment, not falling within the scope of the claims;
FIG. 7 is a top side view of the heater according to an embodiment, not falling within the scope of the claims;
FIG. 8 is a top side view of a heater according to another embodiment, not falling within the scope of the claims;
FIG. 9 is a cross-sectional view of the heater according to an embodiment; and
FIG. 10 is a flowchart for explaining an operating method of an aerosol generating device according to an embodiment.

### Best Mode for Carrying out the Invention

According to an aspect of the present disclosure, an aerosol generating device includes a heater configured to heat a first aerosol generating substrate inserted into a cavity, a vaporizer configured to heat a second aerosol generating substrate, and a controller configured to control power supplied to the heater and the vaporizer based on a first mode for generating a smokeless aerosol and a second mode for generating a smoke aerosol.

The heater includes a support configured to form a bottom surface of the cavity, and a heating element, which is disposed in the center part of the support and into which the first aerosol generating substrate is inserted.

The aerosol generating device further includes an airflow path on which an aerosol generated from the second aerosol generating substrate flows, and the support includes a plurality of through holes arranged at a distance greater than a preset separation distance from the center part so that the airflow path and the cavity communicate with each other.

The size of the plurality of through holes may increase as being closer to an outside of the support from the center part of the support.

The plurality of through holes may include a first through-hole set arranged within a range of a first separation distance to a second separation distance from the center part of the support and having a first diameter, and a second through-hole set arranged within a range of the second separation distance to a third separation distance from the center part and having a second diameter greater than the first diameter.

The controller may supply power to the heater in the first mode and may cut off the power supplied to the vaporizer.

The controller may supply power to the heater and the vaporizer according to a first sub-mode included in the second mode when the first aerosol generating substrate is inserted into the cavity in the second mode.

The controller may cut off power supplied to the heater and supply power to the vaporizer according to a second sub-mode included in the second mode when a different inhalation substrate from the first aerosol generating substrate is inserted into the cavity in the second mode.

The first aerosol generating substrate may include a tobacco rod and a filter rod, and the inhalation substrate may include a filter rod without a tobacco rod.

The aerosol generating device may further include an input unit configured to receive a user input, wherein the controller may control power according to the first mode or the second mode based on the user input.

### Mode for the Invention

With respect to the terms used to describe the various embodiments, general terms which are currently and widely used are selected in consideration of functions of structural elements in the various embodiments of the present disclosure. In addition, in certain cases, a term which is not commonly used can be selected. In such a case, the meaning of the term will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and/or operation and can be implemented by hardware components or software components and combinations thereof.

Hereinafter, the present disclosure will now be described more fully with reference to the accompanying drawings, in which exemplary embodiments of the present disclosure are shown such that one of ordinary skill in the art may easily work the present disclosure. The disclosure can, however, be embodied in many different forms and should not be construed as being limited to the embodiments set forth herein.

Hereinafter, embodiments of the present disclosure will be described in detail with reference to the drawings.

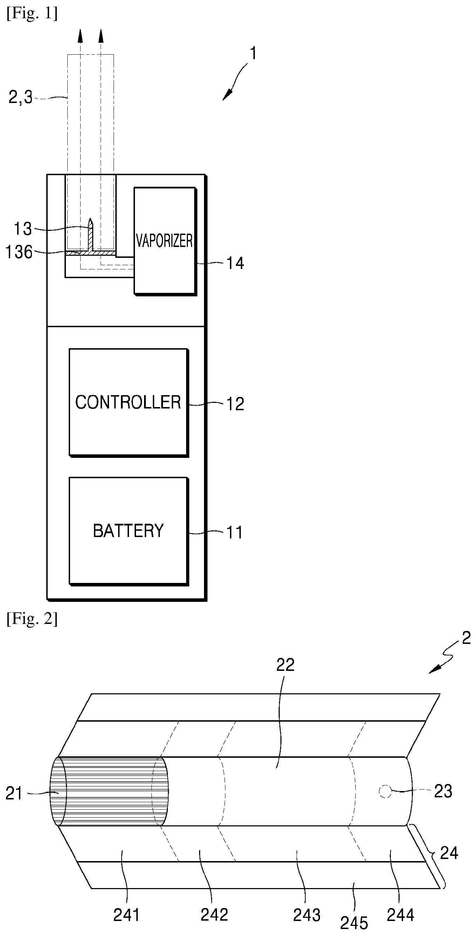

FIG. 1 is a view of an aerosol generating device according to an embodiment.

An aerosol generating device 1 shown in FIG. 1 includes components related to an embodiment. Thus, it will be understood by those skilled in the art that other general components than the components shown in FIG. 1 may be further included in the aerosol generating device 1.

Referring to FIG. 1, the aerosol generating device 1 includes a controller 12, a heater 130, and a vaporizer 14 and may include a battery 11. In addition, a first aerosol generating substrate 2 or an inhalation substrate 3 may be inserted into an inner space of the aerosol generating device 1.

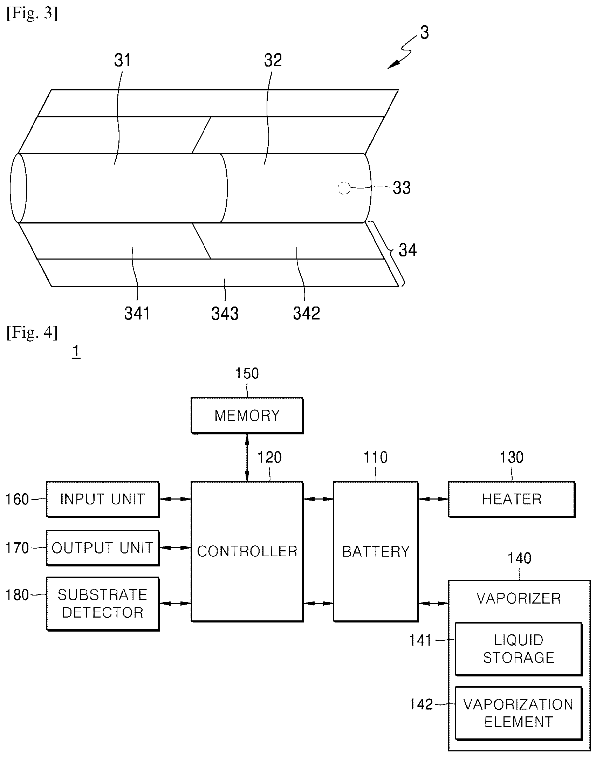

The first aerosol generating substrate 2 may be a cigarette. In addition, the inhalation substrate 3 may be in the form of the cigarette and may not include a cigarette medium part. The first aerosol generating substrate 2 and the inhalation substrate 3 will be described later with reference to FIGS. 2 and 3.

When the first aerosol generating substrate 2 or the inhalation substrate 3 is inserted into the aerosol generating device 1, the aerosol generating device 1 may operate the heater 13 and/or the vaporizer 14 to generate an aerosol. The aerosol generated by the heater 13 and/or the vaporizer 14 passes through the first aerosol generating substrate 2 or the inhalation substrate 3 and is delivered to a user.

If necessary, even when the first aerosol generating substrate 2 or the inhalation substrate 3 is not inserted into the aerosol generating device 1, the aerosol generating device 1 may heat the heater 13.

The battery 11 may supply power used to operate the aerosol generating device 1. For example, the battery 11 may supply power through which the heater 13 and/or the vaporizer 14 may be heated, and may supply power required to operate the controller 12. In addition, the battery 11 may supply power required to operate a display, a sensor, a motor etc. installed in the aerosol generating device 1.

The controller 12 may control the overall operation of the aerosol generating device 1. In detail, the controller 12 may control operations of other components included in the aerosol generating device 1 in addition to the battery 11, the heater 13, and the vaporizer 14. In addition, the controller 12 may check the state of each of the components of the aerosol generating device 1 to determine whether the aerosol generating device 1 is operable.

The controller 12 may include at least one processor. The processor may be implemented with an array of a plurality of logic gates and may also be implemented with a combination of a general micro-processor and memory in which a program to be executed by the micro-processor is stored. In addition, it will be understood by those skilled in the art that the processor may be implemented by a hardware having another shape.

The heater 13 may be heated by power supplied from the battery 11. For example, when the first aerosol generating substrate 2 is inserted into the aerosol generating device 1, the heater 13 may be located in the first aerosol generating substrate 2. Thus, the heated heater 13 may increase the temperature of the first aerosol generating substrate 2.

When the inhalation substrate 3 is inserted into the aerosol generating device 1, the heater 13 may be located in the inhalation substrate 3 and may not be heated. This is because the inhalation substrate 3 is used to filter the aerosol generated by the vaporizer 14 and to give resistance to draw. In other words, the inhalation substrate 3 does not need to be heated because it does not include the cigarette medium part.

The heater 13 may be an electrical resistance heater. For example, the heater 13 may include an electrical conductive track, and the heater 13 may be heated as a current flows through the electrical conductive track. However, the heater 13 is not limited to the above-described example, and may be without limitation as long as it can be heated to a desired temperature. Here, the desired temperature may be pre-set in the aerosol generating device 1 and may also be set to a desired temperature by the user.

As another example, the heater 13 may be an induction heating heater. In detail, the heater 13 may include an electrical conductive coil for heating the first aerosol generating substrate 2 by using an induction heating method, and the first aerosol generating substrate 2 may include a susceptor that generates heat by the induction heating method.

For example, the heater 13 may include a tubular heating element, a plate-type heating element, a needle-type heating element, or a rod-shaped heating element, and may heat the inside or the outside of the first aerosol generating substrate 2 according to the shape of the heating element.

In an embodiment, a plurality of heaters 13 may be arranged in the aerosol generating device 1. In this case, the plurality of heaters 13 may be arranged to be inserted into the first aerosol generating substrate 2 or the inhalation substrate 3 or may be arranged outside the first aerosol generating substrate 2 or the inhalation substrate 3. In addition, a portion of the plurality of heaters 13 may be arranged to be inserted into the first aerosol generating substrate 2 or the inhalation substrate 3, and the other of the plurality of heater 13 may be arranged outside the first aerosol generating substrate 2 or the inhalation substrate 3. In addition, the shape of the heater 13 is not limited to the shape shown in FIG. 1 but may be manufactured in various shapes.

The vaporizer 14 may generate an aerosol by heating a liquid composition, and the generated aerosol may pass through the first aerosol generating substrate 2 or the inhalation substrate 3 and may be delivered to the user. In other words, the aerosol generated by the vaporizer 14 may move along an airflow passage of the aerosol generating device 1, and the airflow passage may be configured to allow the aerosol generated by the vaporizer 14 to pass through the first aerosol generating substrate 2 or the inhalation substrate 3 and be delivered to the user.

For example, the vaporizer 14 may include a liquid storage, a liquid delivery element, and a vaporization element. For example, the liquid storage, the liquid delivery element, and the vaporization element may be independent modules and may be included in the aerosol generating device 1. For example, the vaporizer 14 may be referred to as a cartomizer or an atomizer but embodiments of the present disclosure are not limited thereto.

The liquid storage may store a second aerosol generating substrate. The second aerosol generating substrate may include a liquid composition. For example, the liquid composition may be a liquid including a tobacco-containing material including a volatile tobacco flavor component. Alternatively, the liquid composition may be a liquid including a non-tobacco material. The liquid storage may be manufactured to be detachable from the vaporizer 14 or may be manufactured integrally with the vaporizer 14.

For example, the liquid composition may include water, solvents, ethanol, plant extracts, spices, flavorings, and vitamin mixtures. The spices may include menthol, peppermint, spearmint oil, and various fruit-flavored ingredients, but are not limited thereto. The flavorings may include ingredients capable of providing various flavors or tastes to the user. Vitamin mixtures can be a mixture of at least one of vitamin A, vitamin B, vitamin C, and vitamin E, but are not limited thereto. In addition, the liquid composition may include an aerosol forming substance, such as glycerin and propylene glycol.

The liquid delivery element may deliver the liquid composition of the liquid storage to a heating element. For example, the liquid delivery element may include a wick, such as a cotton fiber, a ceramic fiber, a glass fiber, or porous ceramic, but embodiments of the present disclosure are not limited thereto.

The vaporization element may be an element for vaporizing the liquid composition delivered by the liquid delivery element.

The vaporization element may heat the liquid composition to generate an aerosol. Alternatively, the vaporization element may vibrate the liquid composition to generate an aerosol.

When the vaporization element generates an aerosol by using a heating method, the vaporization element may heat the liquid composition by using a resistance heating and/or an induction heating method. For example, the vaporization element may include a metal wire, a metal plate, a ceramic heater coil, or the like, but embodiments of the present disclosure are not limited thereto. In addition, the vaporization element may include a conductive filament, such as a nichrome wire, and may be arranged to be wound on the liquid delivery element. The vaporization element may be heated by the supply of current, may deliver heat to the liquid composition that comes in contact with the vaporization element to deliver heat, thereby heating the liquid composition. As a result, an aerosol may be generated.

When the vaporization element generates an aerosol by suing a vibration method, the vaporization element may include a vibrator for generating ultrasonic vibration, a liquid delivery element, and a vibration accommodating portion for generating an aerosol by delivering ultrasonic vibration to the aerosol generating substrate absorbed into the liquid delivery element. The vibrator may generate vibration of a short period. Vibration generated from the vibrator may be ultrasonic vibration, and the frequency of ultrasonic vibration may be, for example, 100 kHz to 3.5 MHz. The aerosol generating substrate by vibration of a short period generated from the vibrator may be vaporized and/or granulated and atomized with an aerosol. The vibrator may include a piezoelectric element, for example, a piezoelectric ceramic. The vibrator may generate vibration (physical force) by an applied electricity, and due to such a physical small vibration, the aerosol generating substrate may be split into small particles and may be atomized to an aerosol. The liquid delivery element may deliver the aerosol generating substrate in the liquid storage within a cartridge to a vibration accommodating portion, and the vibration accommodating portion may perform a function of converting the aerosol generating substrate delivered by the liquid delivery element by receiving vibration generated from the vibrator. Meanwhile, the vibration accommodating portion may be implemented in a mesh shape or a plate shape without a separate liquid delivery element so that the vibration element may generate an aerosol by receiving the vibration together with absorption and delivery of the aerosol generating substrate.

The aerosol generating device 1 may further include general components, in addition to the battery 11, the controller 12, the heater 13, and the vaporizer 14. For example, the aerosol generating device 1 may include a display for outputting visual information and/or a motor for outputting tactile information. In addition, the aerosol generating device 1 may include at least one sensor (e.g., a puff detecting sensor, a temperature detecting sensor, a cigarette insertion detecting sensor etc.). In addition, the aerosol generating device 1 may be manufactured in such a way that an external air may be introduced or an internal air may be discharged even when the first aerosol generating substrate 2 is inserted.

Although not shown, the aerosol generating device 1 may constitute a system together with an additional cradle. For example, the cradle may be used to charge the battery 11 of the aerosol generating device 1. Alternatively, the heater 13 and the vaporizer 14 may operate in a state in which the cradle and the aerosol generating device 1 are combined with each other.

The first aerosol generating substrate 2 and the inhalation substrate 3 may be similar to a general combustion type cigarette. For example, the first aerosol generating substrate 2 may be divided into a first portion including a compound for generating aerosol and a second portion including a filter and the like. The compound for generating an aerosol may also be included in the second portion of the first aerosol generating substrate 2. For example, a compound in the form of granules or capsules which generates an aerosol may be inserted into the second portion. Likewise, the inhalation substrate 3 may be divided into a first portion and a second portion. The inhalation substrate 3 may not include the compound for generating the aerosol. In other words, the first portion and the second portion of the inhalation substrate 3 may include a filter or the like. According to an embodiment, the second portion of the inhalation substrate 3 may be in the form of granules or capsules, and may include a fragrance compound for imparting flavor to the aerosol generated by the vaporizer 14.

The first portion may be entirely inserted into the aerosol generating device 1, and the second portion may be exposed to the outside. Alternatively, only a portion of the first portion may be inserted into the aerosol generating device 1, and the entire first portion and a portion of the second portion may be inserted into the aerosol generating device 1. The user may inhale the aerosol while holding the second portion by the mouth of the user. In this case, the aerosol generated by the first aerosol generating substrate 2 or the vaporizer 14 passes through the first portion and the second portion and is delivered to the user's mouth.

The external air may flow into at least one air passage formed in the aerosol generating device 1. For example, the opening and closing and/or a size of the air passage formed in the aerosol generating device 1 may be adjusted by the user. Accordingly, the amount of smoke and a smoking impression may be adjusted by the user. As another example, the external air may flow into the cigarette through at least one hole formed in a surface of the first aerosol generating substrate 2 or the inhalation substrate 3.

Hereinafter, examples of the first aerosol generating substrate 2 and the inhalation substrate 3 will be described with reference to FIGS. 2 and 3.

FIG. 2 is a view illustrating a first aerosol generating substrate according to an embodiment, and FIG. 3 is a view illustrating an inhalation substrate according to an embodiment.

Referring to FIG. 2, a first aerosol generating substrate 2 may include a tobacco rod 21 and a filter rod 22. The first portion described above with reference to FIG. 1 may include the tobacco rod 21, and the second portion may include the filter rod 22.

FIG. 2 illustrates the filter rod 22 as a single element. However, embodiments of the present disclosure are not limited thereto. In other words, the filter rod 22 may include a plurality of segments. For example, the filter rod 22 may include a segment for cooling an aerosol and a segment for filtering certain ingredients included in the aerosol. In addition, if necessary, the filter rod 22 may further include at least one segment performing other functions.

The first aerosol generating substrate 2 may be packaged by at least one wrapper 24. At least one hole through which external air is introduced or the internal gas is discharged may be formed in the wrapper 24. In an example, the first aerosol generating substrate 2 may be packaged by a single wrapper. In another example, the first aerosol generating substrate 2 may be packaged by two or more wrappers. For example, the tobacco rod 21 may be packaged by a first wrapper 241, and the filter rod 22 may be packaged by wrappers 242, 243, and 244. Then, the first aerosol generating substrate 2 may be re-packaged by another single wrapper 245. If the filter rod 22 includes a plurality of segments, the plurality of segments may be packaged by the wrappers 242, 243, and 244, respectively.

The tobacco rod 21 may include an aerosol generating material. When the tobacco rod 21 is heated, invisible smoke may occur. For example, the aerosol generating material may include propylene glycol (PG). In addition, the aerosol generating material may not include vegetable glycerin (VG).

The tobacco rod 21 may contain another additive material, such as a fragrance, a wetting agent, and/or an organic acid. In addition, the tobacco rod 21 may be added by spraying a flavoring liquid, such as a menthol or a moisturizer, to the tobacco rod 21.

The tobacco rod 21 may be manufactured in various ways. For example, the tobacco rod 21 may be manufactured as a sheet or a strand. In addition, the tobacco rod 21 may be manufactured by cutting the tobacco sheet into small pieces. The tobacco rod 21 may also be surrounded by a thermally conductive material. For example, the thermally conductive material may be a metal foil such as an aluminum foil. However, embodiments of the present disclosure are not limited thereto. For example, the thermally conductive material surrounding the tobacco rod 21 may uniformly disperse heat transferred to the tobacco rod 21 to improve the thermal conductivity applied to the tobacco rod, thereby improving the taste of tobacco. In addition, the thermally conductive material surrounding the tobacco rod 21 can function as a susceptor heated by the induction heating-type heater. In this case, although not shown, the tobacco rod 21 may further include an additional susceptor in addition to the thermally conductive material surrounding an outside of the tobacco rod 21.

The filter rod 22 may be a cellulose acetate filter. The shape of the filter rod 22 is not limited. For example, the filter rod 22 may be a cylindrical type rod or a tube type rod including a hollow therein. In addition, the filter rod 22 may be a recess type rod. If the filter rod 22 includes a plurality of segments, at least one of the plurality of segments may be manufactured in another shape.

In addition, at least one capsule 23 may be included in the filter rod 22. Here, the capsule 23 may perform a function of generating flavors, and generating an aerosol. For example, the capsule 23 may have a structure in which a liquid containing a fragrance is wrapped with a film. The capsule 23 may have a spherical or cylindrical shape, but embodiments of the present disclosure are not limited thereto.

Referring to FIG. 3, the inhalation substrate 3 may cool the aerosol generated by the vaporizer 14 and may provide resistance to draw.

The inhalation substrate 3 may not include the tobacco rod 21 as opposed to the first aerosol generating substrate 2 of FIG. 1. The inhalation substrate 3 may include a cooling rod 31 and a filter rod 32. The first portion described above with reference to FIG. 1 may include a cooling rod 31, and the second portion may include a filter rod 32.

The inhalation substrate 3 may be packaged by at least one wrapper 34. At least one hole through which external air is introduced or the internal gas is discharged may be formed in the wrapper 34. In addition, the inhalation substrate 3 may be packaged by one wrapper. In another example, the inhalation substrate 3 may be packaged by two or more wrappers 34. For example, the cooling rod 31 may be packaged by a first wrapper 341, and the filter rod 32 may be packaged by wrappers 342, 343, and 344. Then, the first aerosol generating substrate 3 may be re-packaged by another wrapper 343.

The cooling rod 31 may cool the aerosol generated by the vaporizer. In addition, the cooling rod 31 may further include a structure for imparting resistance to draw. The filter rod 32 may be a cellulose acetate filter. The shape of the filter rod 32 is not limited. For example, the filter rod 32 may be a cylindrical type rod or a tube type rod including a hollow therein. In addition, the filter rod 32 may be a recess type rod.

In addition, at least one capsule 33 may be included in the filter rod 32. Here, the capsule 33 may perform a function of generating a flavor. For example, the capsule 33 may have a structure in which a liquid containing a fragrance is wrapped with a film. The capsule 33 may have a spherical or cylindrical shape, but embodiments of the present disclosure are not limited thereto.

FIG. 4 is an internal block diagram of an aerosol generating device according to an embodiment.

Referring to FIG. 4, an aerosol generating device 1 according to an embodiment includes a controller 120, a heater 130 and a vaporizer 140 and may include a battery 110, a substrate detector 180, an output unit 160, an input unit 170, and memory 150. The battery 110, the controller 120, the heater 130, and the vaporizer 140 of FIG. 4 may correspond to the battery 11, the controller 12, the heater 13, and the vaporizer 14 of FIG. 1, respectively.

The controller 120 may collectively control the battery 110 included in the aerosol generating device, the first heater 130, the vaporizer 140, the memory 150, the input unit 160, the output unit 170, and the substrate detector 180, which are included in the aerosol generating device 1.

The battery 110 may supply power to the heater 130 and the vaporizer 140, and the magnitude of the power supplied to the heater 130 and the vaporizer 140 may be adjusted by the controller 120.

The heater 130 may generate a first aerosol by heating the first aerosol generating substrate 2. When a current is applied to the heater 130, heat may be generated by a unique resistor, and when the first aerosol generating substrate 2 is in contact (coupled) to the heated heater 130, an aerosol may be generated.

The first aerosol generating substrate 2 may be a solid substrate that generates a smokeless aerosol. The smokeless aerosol may be referred to as other terms having the same meaning, such as invisible vapor. For example, the first aerosol generating substrate 2 may include propylene glycol (PG). In addition, the first aerosol generating substrate 2 may not include vegetable glycerin (VG).

The vaporizer 140 may include a liquid storage 141 for storing a second aerosol generating substrate and a vaporization element 142 for vaporizing the second aerosol generating substrate. The vaporization element 142 may be powered from the battery 110. In addition, the vaporization element 142 may generate a second aerosol from the second aerosol generating substrate through a heating method and/or an ultrasonic vibration method.

The second aerosol generating substrate may be a liquid for generating a smoke aerosol. The smokeless aerosol may be referred to as other terms having the same meaning, such as invisible vapor.

The controller 120 controls power supplied to the heater 130 and the vaporizer 140. The controller 120 may control power to the heater 130 and the vaporizer 140 by controlling the battery 110. The power supplied from the vaporizer 140 may be delivered to the vaporization element 142 and may generate a smoke aerosol.

The controller 120 can control power supplied to the heater 130 and the vaporizer 140 through a pulse width modulation (PWM) method. To this end, the controller 120 may include a PWM module.

The controller 120 may control power supplied to the heater 130 and the vaporizer 140 to heat the first aerosol generating substrate 2 and a second aerosol generating substrate.

The controller 120 may control power supplied to the heater 130 and the vaporizer 140 based on a first mode for generating a smokeless aerosol and a second mode for generating a smoke aerosol.

The controller 120 may supply power to the heater 13 and may cut off the power supplied to the vaporizer 140 in the first mode for generating a smokeless aerosol. The first aerosol generating substrate 2 may be heated by the heater 130 to generate an aerosol. Because the first aerosol generating substrate 2 includes a compound for generating a smokeless aerosol, the first aerosol may be a smokeless aerosol.

When the first aerosol generating substrate 2 is inserted in the second mode for generating the smoke aerosol, the control unit 120 may supply power to the heater 130 and the vaporizer 140 according to a first sub-mode. The vaporizer 140 may generate a second aerosol from the second aerosol generating substrate. Because the second aerosol generating substrate includes a compound for generating a smokeless aerosol, the second aerosol may be a smoke aerosol. The second aerosol may pass through the second aerosol generating substrate 2 and may be delivered to the user along with the first aerosol. In the first sub-mode, the second aerosol that is a smoke aerosol is delivered to the user along with the first aerosol, and thus the first sub-mode may be referred to as a smoke mode.

When the first aerosol generating substrate 2 is inserted in the second mode for generating the smoke aerosol, the controller 120 may cut off power supplied to the heater 130 and may supply power to the vaporizer 140 according to a second sub-mode. The second aerosol that is the smoke aerosol may pass through the inhalation substrate 3 and may be delivered to the user.

In an embodiment, information about a substrate inserted into a cavity may be obtained by the substrate detector 180. For example, the first aerosol generating substrate 2 and the inhalation substrate 3 may include different magnetic substances, and the substrate detector 180 may determine the type of the substrate inserted into the cavity according to a change in inductance according to insertion of the substrate. However, a method of determining the type of the substrate is not limited thereto.

In another embodiment, the input unit 160 may receive a user input for selecting a mode, and the controller 120 may control power supplied to the heater 130 and the vaporizer 140 according to the first mode or the second mode based on the user input. For example, the first aerosol generating substrate 2 or the inhalation substrate 3 may be inserted into the cavity according to the user's selection, and the aerosol generating device 1 may operate in the first mode or the second mode according to the user's command received by the input unit 160.

If the inhalation substrate is inserted into the cavity, the heater 130 may not be heated even if the controller 120 receives an input signal for selecting the first mode or the second sub-mode from the user. This is to prevent carbonization of the inhalation substrate due to heating of the first portion because the first portion of the inhalation substrate includes a cooling rod instead of the tobacco rod.

The output unit 170 may output visual information and/or tactile information related to the aerosol generating device 1. For example, the controller 120 may obtain information about the substrate inserted into the cavity from the substrate detector 180 and may output the information about the substrate through the output unit 170. In another example, the controller 120 may obtain mode selection information received by the input unit 160 and may control the output unit 170 to output mode selection information.

The memory 150 may store various information for an operation of the aerosol generating device 1. For example, the memory 150 may store a lookup table for identifying a substrate to be inserted into the cavity. In another example, the memory 150 may store temperature profile information of the heater 130 and the vaporizer 140 in each mode.

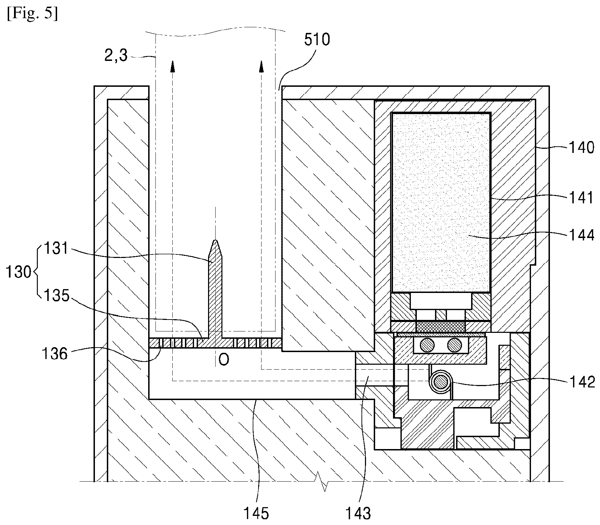

FIG. 5 is a cross-sectional view of an aerosol generating device according to an embodiment, not falling within the scope of the claims.

Referring to FIG. 5, the aerosol generating device 1 may include a heater 130 and a vaporizer 140.

The heater 130 may include a support 135 forming a bottom surface of the cavity 510, and a heating element 131 that is inserted into the first aerosol generating substrate 2 or the inhalation substrate 3. The heating element 131 may be arranged in a center part O of the support 135 and may penetrate the first aerosol generating substrate 2 or the inhalation substrate 3. The first aerosol generating substrate 2 and the inhalation substrate 3 may be solid substrates. The heating element 131 may generate a first aerosol by heating the first aerosol generating substrate 2. When the inhalation substrate 3 is inserted into the aerosol generating device 1, the heating element 131 may not heat the inhalation substrate. The support 135 may include at least one through hole 136, and an airflow path 145 and a cavity to be described later may be in fluid communication with each other through the through hole 136.

The vaporizer 140 may be installed in a replaceable manner and may include a liquid storage 141 and a vaporization element 142. The liquid storage 141 may store a second aerosol generating substrate 144 for generating a smoke aerosol. The second aerosol generating substrate 144 may be a liquid composition. The vaporization element 142 may generate a second aerosol that is a smoke aerosol from the second aerosol generating substrate 144. To this end, the vaporization element 142 may include a liquid delivery element and a heating element. However, the present disclosure is not limited a heating method as a method of generating a second aerosol. For example, the vaporization element 142 of the present disclosure may generate a second aerosol by using an ultrasonic method.

The vaporizer 140 may include a communication hole 143 through which the second aerosol is discharged, and the communication hole 143 may be in fluid communication with the airflow path 145. The airflow path 145 may be disposed under the support 135 and may be in fluid communication with a cavity 510 through the through hole 136 formed in the support 135. Thus, the second aerosol generated in the second mode may be delivered to the first aerosol generating substrate 2 or the inhalation substrate 3 through the airflow path 145 and the through hole 136.

In more detail, when the first aerosol generating substrate 2 is inserted into the cavity 510 in a first sub-mode included in the second mode, the second aerosol generated by the vaporizer 140 may pass through the airflow path 145 and the through hole 136 and may be delivered to the first aerosol generating substrate 2. In addition, since the first aerosol generating substrate 2 is heated in the first sub-mode, the first aerosol generated from the first aerosol generating substrate 2 may be delivered to the user together with the second aerosol.

When the inhalation substrate 3 is inserted into the cavity 510 in a second sub-mode included in the second mode, the second aerosol generated by the vaporizer 140 may pass through the airflow path 145 and the through hole 136 and may be delivered to the inhalation substrate 3. In this case, because the inhalation substrate 3 is not heated in the second sub-mode, only the second aerosol may be delivered to the user.

In the first mode, the vaporization element 142 is not heated, and thus only the first aerosol generated in the first aerosol generating substrate 2 is delivered to the user.

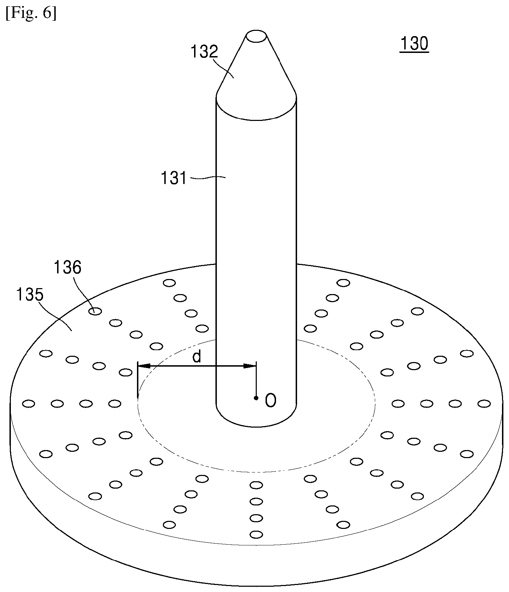

FIG. 6 is a view of a heater according to an embodiment, not falling within the scope of the claims.

Referring to FIG. 6, the heater 130 may include a heating element 131 inserted into the first aerosol generating substrate 2 or the inhalation substrate 3, and a support 135 that supports the heating element 131. The heating element 131 may extend in a lengthwise direction of the first aerosol generating substrate 2 and the inhalation substrate 3 to correspond to at least a part of the entire length of the first aerosol generating substrate 2 and the inhalation substrate 3. The heating element 131 may have a cylindrical shape or rod shape having a diameter smaller than the diameter of the first aerosol generating substrate 2 and the inhalation substrate 3. The length of the heating element 131 may be set to be smaller than the length of the first aerosol generating substrate 2 and the inhalation substrate 3. In this case, the length may refer to a dimension in the lengthwise direction in which a central axis of the heating element 131 extends.

The shape of the heating element 131 is not limited by embodiments illustrated in the drawings, and may be variously modified. For example, the diameter of the heating element 131 may be modified to be greater or less than the diameter shown in FIG. 6, and may be manufactured in a shape such as a needle.

One end 132 of the heating element 131 has a tapered shape so that one end 132 of the heating element 131 may be easily inserted into the first aerosol generating substrate 2 and the inhalation substrate 3.

The support 135 may be combined with the heating element 131 and may maintain a position of the heating element 131. The support 135 may extend outwards from the heating element 131 such that the end of the first aerosol generating substrate 2 or the inhalation substrate 3 are supported by the support 135 when the first aerosol generating substrate 2 or the inhalation substrate 3 is inserted into the cavity 510.

The heating element 131 may be coupled by penetrating the support 135 or may be coupled to the support 135 by a coupling member. However, the coupling method of the present disclosure is not limited thereto. For example, the heating element 131 and the support 135 may be coupled by a bayonet mount fastening structure, may be coupled by a screw coupling method, or may be coupled by an insert injection method.

The support 135 may include a plurality of through holes 136 through which the airflow path 145 and the cavity communicate with each other. In addition, in order to prevent the second aerosol from adhering to the heating element 131, the plurality of through holes 136 may be disposed at a distance greater than a certain separation distance d from the center part O of the support 135. The diameter of the plurality of through holes 136 may be selected in the range of 0.5 mm to 2 mm. FIG. 6 illustrates that the shape of the through holes 136 is a circular shape. However, the shape of the through holes 136 is not limited thereto. For example, the shape of the through holes 136 may be formed of elliptical, polygonal, or the like. In addition, the arrangement of the through holes 136 is also not limited to the arrangement shown in FIG. 6. For example, the through holes 136 may be irregularly arranged.

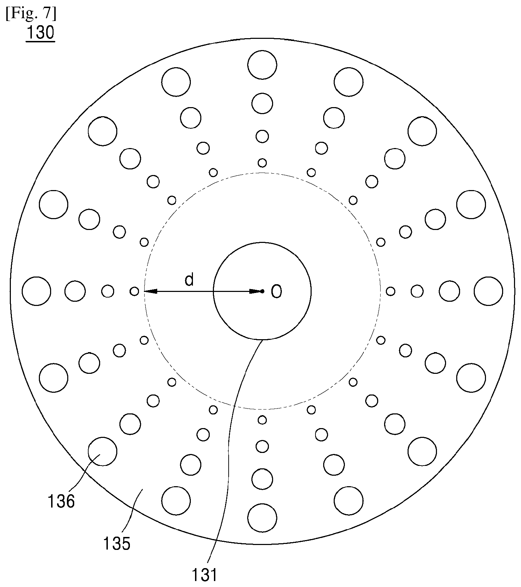

FIG. 7 is a top side view of the heater according to an embodiment.

Referring to FIG. 7, the support 135 may include a plurality of through holes 136 disposed at a distance greater than a certain separation distance d from the center part O. The separation distance d may be referred to as a reference distance d.

The plurality of through holes 136 may increase in size from the center part O of the support 135 toward the outside of the support 135. For example, the diameter of a first through hole arranged at a first distance from the center part O of the support 135 may be less than a diameter of a second through hole arranged farther from the center part O of the support 135. In this case, the first distance may be greater than the first separation distance d.

Since the heating element 131 is disposed at the center part O of the support 135, the diameter of the through holes 136 disposed close to the center part O may be set to be small so that an aerosol generated in the vaporizer 14 may be effectively prevented from adhering to the heating element 131.

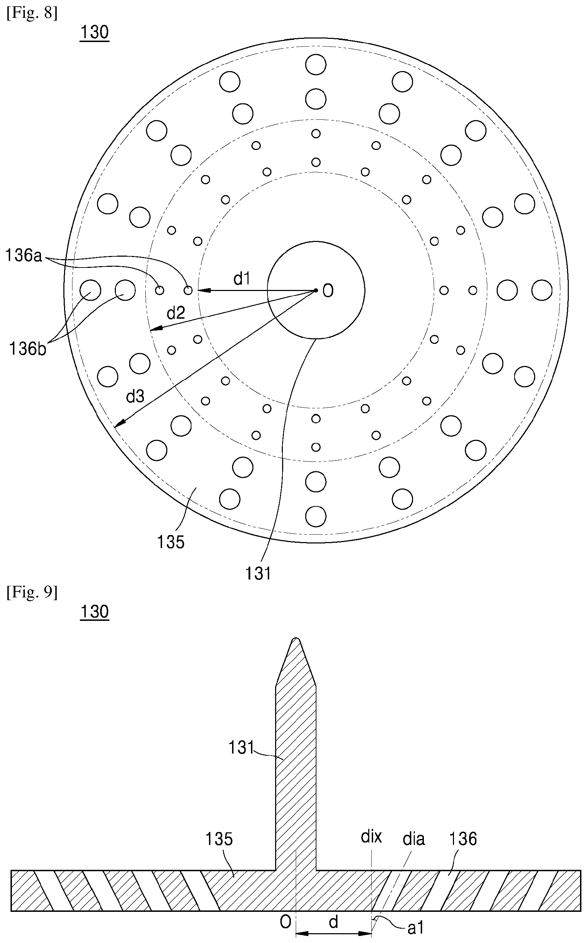

FIG. 8 is a top side view of a heater according to another embodiment, not falling within the scope of the claims.

Referring to FIG. 8, the support 135 may include a plurality of through holes 136 disposed at a distance greater than a certain separation distance d from the center part O. In addition, a first through-hole set 136a may be disposed within a range of a first separation distance d1 to a second separation distance d2 greater than the first separation distance d1, from the center part O of the support 135. In addition, a second through-hole set 136b may be arranged within a range of a second separation distance d2 to a third separation distance d3 greater than the second separation distance d2, from the center part O of the support 135. The first separation distance d1 may be greater than a preset reference distance d.

The diameter of the through holes 136 included in the first through set 136a may have a first diameter. The diameter of the through holes 136 included in the second through set 136a may have a second diameter. The first diameter may be less than the second diameter. As described with reference to FIG. 7, the diameter of the first through-hole set 136a disposed close to the center part O of the support 135 may be set to be small so that the aerosol generated in the vaporizer 14 may be effectively prevented from adhering to the heating element 131. In addition, unlike FIG. 7, the through holes within a certain area have the same diameter in FIG. 8 so that manufacturing convenience may be increased.

FIG. 9 is a cross-sectional view of the heater according to an embodiment.

Referring to FIG. 9, the support 135 includes a plurality of through holes 136 disposed at a distance greater than a preset separation distance d from the center part O.

An axial direction dix of the heating element 131 and an extending direction dia of the through holes 136 cross each other. In other words, the extending direction dia of the through holes 136 is inclined with respect to the axial direction dix of the heating element 131. An angle between the axial direction dix of the heating element 131 and the extending direction dia of the through holes 136 may be set within a range of 5 to 40 degrees.

By setting the extending direction dia of the through holes 136 to be inclined with respect to the axial direction dix of the heating element 131, the aerosol generated in the vaporizer 14 may be more effectively prevented from adhering to the heating element 131.

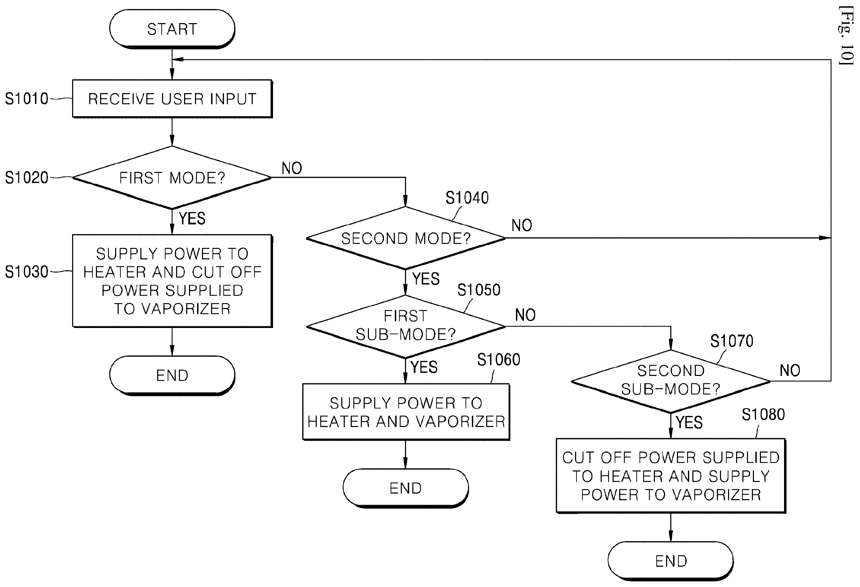

FIG. 10 is a flowchart illustrating an operating method of an aerosol generating device according to an embodiment.

Referring to FIG. 10, in operation S1010, an input unit 160 may receive a user input. The user input may be an operation instruction for a first mode for generating a smokeless aerosol or a second mode for generating a smoke aerosol. The input unit 160 may convert the user input into an electrical signal to transmit the electrical signal to the controller 120.

In operation S1020, the controller 120 may determine whether the user input is a first mode.

The first mode may be a mode in which a smokeless aerosol is generated. The smokeless aerosol may be referred to as other terms, such as invisible vapor.

In operation S1030, when it is determined that the user input is the first mode, the controller 120 may supply power to the heater 130 and may cut off the power supplied to the vaporizer 140.

As a result, the heater 130 may generate a first aerosol by heating the first aerosol generating substrate 2 in the first mode. According to an embodiment, when it is determined that the inhalation substrate 3 is inserted into the cavity 510, the controller 120 may not supply power to the heater 130 even when the user input of the first mode is received. This is to prevent carbonization of the inhalation substrate due to heating of the first portion because the first portion of the inhalation substrate includes a cooling rod instead of the tobacco rod.

In operation S1040, when it is determined that the user input is not the first mode, the controller 120 may determine whether the user input is a second mode.

The second mode may be a mode in which a smoke aerosol is generated. The smoke aerosol may be referred to as other terms, such as visible vapor.

In operation S1050, when it is determined that the user input is the second mode, the controller 120 may determine whether the user input is a first sub-mode.

According to an embodiment, the controller 120 may operate in the first sub-mode according to the type of the substrate detected by the substrate detector 180 without the user input of the first sub-mode. For example, when the substrate detector 180 detects the first aerosol generating substrate 2, the controller 120 may operate in the first sub-mode.

In operation S1060, the controller 120 may supply power to the heater 130 and the vaporizer 140 in the first sub-mode.

The heater 130 may generate a first aerosol by heating the first aerosol generating substrate 2 in the first sub-mode. The vaporizer 140 may generate a second aerosol by heating the second aerosol generating substrate 144. The fist sub-mode may be included in a smoke mode because visible vapor (i.e., smoke aerosol) is generated by the second aerosol generating substrate 144.

In operation S1070, when it is determined that the user input is not the first sub-mode, the controller 120 may determine whether the user input is a second sub-mode.

According to an embodiment, the controller 120 may operate in the second sub-mode according to the type of the substrate detected by the substrate detector 180 without the user input of the second sub-mode. For example, when the substrate detector 180 detects the inhalation substrate 3, the controller 120 may operate in the second sub-mode.

In operation S1080, the controller 120 may cut off power supplied to the heater 130 in the second sub-mode and may supply power to the vaporizer 140.

The vaporizer 140 may generate a second aerosol by heating the second aerosol generating substrate 144 in the second sub-mode. The inhalation substrate 3 may cool the second aerosol and impart resistance to draw.

Those of ordinary skill in the art pertaining to the present embodiments can understand that various changes in form and details can be made therein without departing from the scope of the appended claims. The disclosed methods should be considered in a descriptive sense only and not for purposes of limitation. The scope of the present disclosure is defined by the appended claims rather than by the foregoing description.

## Claims

1. An aerosol generating device (1) comprising:
a cavity (510);
a heater (13, 130) configured to heat a first aerosol generating substrate (2) inserted into the cavity (510);
a vaporizer (14, 140) configured to heat a second aerosol generating substrate (144); and
a controller (12, 120) configured to control power supplied to the heater (13, 130) and the vaporizer (14, 140) based on a first mode for generating a smokeless aerosol being an invisible vapor and a second mode for generating a smoke aerosol being a visible vapor,
an airflow path (145) on which an aerosol generated from the second aerosol generating substrate (144) flows,
wherein the heater (13, 130) comprises:
a support (135) configured to form a bottom surface of the cavity (510); and
a heating element (131), which is arranged in a center part (O) of the support (135) and is configured to penetrate the first aerosol generating substrate (2),
wherein the support (135) comprises a plurality of through holes (136) arranged at a distance greater than a preset separation distance from the center part (O) so that the airflow path (145) and the cavity (510) communicate with each other, and
wherein an extending direction (dia) of the through holes (136) is inclined with respect to an axial direction (dix) of the heating element (131).

2. The aerosol generating device (1) of claim 1, wherein the controller (12, 120) is further configured to supply power to the heater (13, 130) and to cut off the power supplied to the vaporizer (14, 140) in the first mode.

3. The aerosol generating device (1) of claim 1, wherein the controller (12, 120) is further configured to, when the first aerosol generating substrate (2) is inserted into the cavity (510) in the second mode, supply power to the heater (13, 130) and the vaporizer (14, 140) according to a first sub-mode included in the second mode.

4. The aerosol generating device (1) of claim 3, wherein the controller (12, 120) is further configured to, when an inhalation substrate (3) that is from the first aerosol generating substrate (2) is inserted into the cavity (510) in the second mode, cut off power supplied to the heater (13, 130) and supply power to the vaporizer (14, 140) according to a second sub-mode included in the second mode.

5. The aerosol generating device (1) of claim 1, further comprising an input unit (160) configured to receive a user input, wherein the controller (12, 120) is further configured to control power according to the first mode or the second mode based on the user input.

## Patentansprüche

1. Aerosolerzeugungsvorrichtung (1), die Folgendes umfasst:
einen Hohlraum (510);
eine Heizeinrichtung (13, 130), die konfiguriert ist, ein erstes aerosolerzeugendes Substrat (2), das in den Hohlraum (510) eingesetzt ist, zu erhitzen;
einen Verdampfer (14, 140), der konfiguriert ist, ein zweites aerosolerzeugendes Substrat (144) zu erhitzen; und
eine Steuereinheit (12, 120), die konfiguriert ist, eine Energie, die der Heizeinrichtung (13, 130) und dem Verdampfer (14, 140) zugeführt wird, auf der Grundlage einer ersten Betriebsart zum Erzeugen eines rauchfreien Aerosols, das ein unsichtbarer Dampf ist, und einer zweiten Betriebsart zum Erzeugen eines Rauchaerosols, das ein sichtbarer Dampf ist, zu steuern,
einen Luftströmungsweg (145), auf dem ein Aerosol, das aus dem zweiten aerosolerzeugenden Substrat (144) erzeugt wird, strömt,
wobei die Heizeinrichtung (13, 130) Folgendes umfasst:
einen Träger (135), der konfiguriert ist, eine untere Fläche des Hohlraums (510) zu bilden; und
ein Heizelement (131), das in einem Mittelabschnitt (O) des Trägers (135) angeordnet ist und konfiguriert ist, das erste aerosolerzeugende Substrat (2) zu durchdringen,
wobei der Träger (135) mehrere Durchgangslöcher (136) umfasst, die in einem Abstand, der größer als ein vorgegebener Trennungsabstand vom Mittelabschnitt (O) ist, angeordnet sind, derart, dass der Luftströmungsweg (145) und der Hohlraum (510) miteinander in Verbindung stehen, und
wobei eine Erstreckungsrichtung (dia) der Durchgangslöcher (136) in Bezug auf eine axiale Richtung (dix) des Heizelements (131) geneigt ist.

2. Aerosolerzeugungsvorrichtung (1) nach Anspruch 1, wobei die Steuereinheit (12, 120) ferner konfiguriert ist, in der ersten Betriebsart der Heizeinrichtung (13, 130) Energie zuzuführen und die Energie, die dem Verdampfer (14, 140) zugeführt wird, auszuschalten.

3. Aerosolerzeugungsvorrichtung (1) nach Anspruch 1, wobei die Steuereinheit (12, 120) ferner konfiguriert ist, dann, wenn das erste aerosolerzeugende Substrat (2) in den Hohlraum (510) eingesetzt ist, in der zweiten Betriebsart der Heizeinrichtung (13, 130) und dem Verdampfer (14, 140) gemäß einer ersten Unterbetriebsart, die in der zweiten Betriebsart enthalten ist, Energie zuzuführen.

4. Aerosolerzeugungsvorrichtung (1) nach Anspruch 3, wobei die Steuereinheit (12, 120) ferner konfiguriert ist, dann, wenn ein Inhalationssubstrat (3), das vom ersten aerosolerzeugenden Substrat (2) stammt, in den Hohlraum (510) eingesetzt ist, in der zweiten Betriebsart die Energie, die der Heizeinrichtung (13, 130) zugeführt wird, auszuschalten und dem Verdampfer (14, 140) gemäß einer zweiten Unterbetriebsart, die in der zweiten Betriebsart enthalten ist, Energie zuzuführen.

5. Aerosolerzeugungsvorrichtung (1) nach Anspruch 1, die ferner eine Eingabeeinheit (160) umfasst, die konfiguriert ist, ein Benutzereingabe zu empfangen, wobei die Steuereinheit (12, 120) ferner konfiguriert ist, die Energie gemäß der ersten Betriebsart oder der zweiten Betriebsart auf der Grundlage der Benutzereingabe zu steuern.

## Revendications

1. Dispositif de production d'aérosol (1) comportant :
une cavité (510) ;
un dispositif de chauffage (13, 130) configuré pour chauffer un premier substrat de production d'aérosol (2) inséré dans la cavité (510) ;
un vaporisateur (14, 140) configuré pour chauffer un second substrat de production d'aérosol (144) ; et
une commande (12, 120) configurée pour commander de l'énergie fournie au dispositif de chauffage (13, 130) et au vaporisateur (14, 140) sur la base d'un premier mode destiné à produire un aérosol sans fumée qui est une vapeur invisible, et d'un second mode destiné à produire un aérosol en fumée qui est une vapeur visible,
un trajet d'écoulement d'air (145) sur lequel un aérosol produit à partir du second substrat de production d'aérosol (144) s'écoule,
dans lequel le dispositif de chauffage (13, 130) comporte :
un support (135) configuré pour former une surface inférieure de la cavité (510) ; et
un élément chauffant (131), qui est agencé dans une partie centrale (O) du support (135) et est configuré pour pénétrer dans le premier substrat de production d'aérosol (2),
dans lequel le support (135) comporte une pluralité de trous traversants (136) agencés à une distance supérieure à une distance de séparation prédéfinie de la partie centrale (O) de sorte que le trajet d'écoulement d'air (145) et la cavité (510) communiquent l'un avec l'autre, et
dans lequel une direction d'extension (dia) des trous traversants (136) est inclinée par rapport à une direction axiale (dix) de l'élément chauffant (131).

2. Dispositif de production d'aérosol (1) selon la revendication 1, dans lequel la commande (12, 120) est en outre configurée pour fournir de l'énergie au dispositif de chauffage (13, 130) et pour couper l'énergie fournie au vaporisateur (14, 140) dans le premier mode.

3. Dispositif de production d'aérosol (1) selon la revendication 1, dans lequel la commande (12, 120) est en outre configurée pour, lorsque le premier substrat de production d'aérosol (2) est inséré dans la cavité (510) dans le second mode, fournir de l'énergie au dispositif de chauffage (13, 130) et au vaporisateur (14, 140) en fonction d'un premier sous-mode inclus dans le second mode.

4. Dispositif de production d'aérosol (1) selon la revendication 3, dans lequel la commande (12, 120) est en outre configurée pour, lorsqu'un substrat d'inhalation (3) qui provient du premier substrat de production d'aérosol (2) est inséré dans la cavité (510) dans le second mode, couper l'énergie fournie au dispositif de chauffage (13, 130) et fournir de l'énergie au vaporisateur (14, 140) en fonction d'un second sous-mode inclus dans le second mode.

5. Dispositif de production d'aérosol (1) selon la revendication 1, comportant en outre une unité d'entrée (160) configurée pour recevoir une entrée d'utilisateur, dans lequel la commande (12, 120) est en outre configurée pour commander l'énergie en fonction du premier mode ou du second mode sur la base de l'entrée d'utilisateur.
